# DEMANDE DE BREVET EUROPEEN

(11) **EP 4 175 055 A1**
(43) Date de publication de la demande: **03.05.2023**
(21) Numéro de dépôt: 22202346.7
(22) Date de dépôt: 19.10.2022
(51) Int. Cl.: H01M 50/574

(54) **DISPOSITIF DE SÉCURITÉ ADAPTABLE SUR UNE CELLULE ÉLECTROCHIMIQUE POUR BLOQUER SON DISPOSITIF INTERRUPTEUR DE COURANT**

(30) Priorité: 26.10.2021 FR 2111364
(71) Demandeur: Commissariat à l'énergie atomique et aux énergies alternatives, 75015 Paris (FR)
(72) Inventeur: VINCENT, Rémi, 38054 GRENOBLE CEDEX 09 (FR); DAUCHY, Julien, 38054 GRENOBLE CEDEX 09 (FR)
(74) Mandataire: INNOV-GROUP

(57) **Abrégé**

L'invention concerne un dispositif de sécurité adaptable sur une cellule électrochimique (1), ladite cellule électrochimique comprenant un corps et un dispositif interrupteur de courant (151) placé sur une borne de la cellule électrochimique et configuré pour passer d'un état fermé dans lequel il assure le passage du courant fourni par la cellule électrochimique à un état ouvert dans lequel il est rompu pour isoler électriquement ladite cellule électrochimique, le dispositif de sécurité comportant :
- Des moyens de maintien (4) du dispositif interrupteur de courant (151), configurés pour maintenir le dispositif interrupteur de courant (151) dans son état fermé,
- Des moyens d'actionnement (5) desdits moyens de maintien, commandés à réception d'un premier signal de pilotage (S_p1),
- Un circuit de pilotage (6) configuré pour générer ledit premier signal de pilotage (S_p1).

## Description

### Domaine technique de l'invention

La présente invention se rapporte à un dispositif de sécurité adaptable sur une cellule électrochimique pour bloquer, à la demande, son dispositif interrupteur de courant.

L'invention concerne également un système d'alimentation électrique comprenant au moins une cellule électrochimique et ledit dispositif de sécurité.

### Etat de la technique

Actuellement, la cellule électrochimique au lithium la plus couramment utilisée est mieux connue sous la référence 18650. Une telle cellule est par exemple décrite dans le brevet US8323825B2**.** Récemment, des cellules à la norme 21700 ont également été proposées.

Ces cellules de type 18650, 21700 ou autres formats cylindriques comportent un conteneur, appelé godet, de forme cylindrique, dans lequel est placé un rouleau, également appelé bobinot, rassemblant les deux électrodes. Un électrolyte est ensuite injecté dans ledit godet. Le godet est fermé à son extrémité inférieure et ouvert à son extrémité supérieure, un capuchon étant apposé à cette extrémité supérieure pour fermer le conteneur de manière hermétique.

Une telle cellule au lithium est étanche et dispose généralement de dispositifs de protection portés par son capuchon afin d'empêcher son explosion dans des cas d'utilisations abusives (en température ou en charge). Ces dispositifs de protection sont notamment les suivants :
- Un dispositif d'interruption de courant (CiD - Pour *"Current Interrupt Device"*) qui interrompt le courant en cas de surpression dans le godet, sans effet sur cette pression ;
- Un évent de surpression réalisé généralement sous la forme d'un disque de rupture qui permet de relâcher les gaz, afin d'empêcher une explosion ;
- Enfin le godet lui-même peut aussi être fragilisé afin de s'ouvrir dans des conditions optimales pour prévenir une explosion trop violente ;

L'évent de surpression est généralement réglé pour rompre à une valeur de 15 à 20 bars et est souvent situé du côté du pôle positif de la cellule. Sur les cellules de type 21700, pour améliorer la sécurité, certains fabricants ajoutent un évent de surpression supplémentaire du côté opposé à celui portant l'évent principal, c'est-à-dire sur le pôle négatif (publication : Darcy et al. - 2018 - "Design Guidelines for Safe High Performing Li-ion Batteries with 18650 cells*"*). Certaines architectures de cellules cylindriques, qui ne disposent pas d'évent sur le pôle positif, disposent cependant d'un évent sur le pôle négatif.

Le dispositif interrupteur de courant est capable de prendre deux états, un état fermé dans lequel il assure la continuité du courant dans la cellule électrochimique et un état ouvert dans lequel il est rompu pour déconnecter la cellule du circuit d'alimentation et la protéger contre les courts-circuits, les surcharges ou autres agressions électriques.

Pour certaines applications, la déconnexion de la cellule électrochimique engendrée par la rupture du dispositif interrupteur de courant, n'est parfois pas souhaitable. Par exemple, dans l'aéronautique, les batteries de secours doivent souvent rester opérationnelles, même dans certaines circonstances extrêmes telles qu'un incendie. Pour ces applications en aéronautique, ne pas utiliser de dispositifs interrupteurs de courant sur les batteries pourrait être une solution, mais ceci n'est pas envisageable car cela pourrait avoir d'autres conséquences néfastes.

La demande de brevet US2014/170450A1 concerne une cellule de type Lithium-Ion et plus particulièrement son système de protection en cas de surcharge de courant, pouvant entraîner une augmentation de la pression des gaz à l'intérieur de la cellule.

Le but de l'invention est de proposer un dispositif de sécurité configuré pour permettre à une cellule électrochimique de poursuivre son fonctionnement, même lorsque certaines circonstances imposeraient dans des conditions normales sa déconnexion par rupture de son dispositif interrupteur de courant.

### Exposé de l'invention

Ce but est atteint par un dispositif de sécurité adaptable sur une cellule électrochimique, ladite cellule électrochimique comprenant un corps et un dispositif interrupteur de courant placé sur une borne de la cellule électrochimique et configuré pour passer d'un état fermé dans lequel il assure le passage du courant fourni par la cellule électrochimique à un état ouvert dans lequel il est rompu pour isoler électriquement ladite cellule électrochimique, le dispositif de sécurité comportant :
- Des moyens de maintien, configurés pour maintenir le dispositif interrupteur de courant dans son état fermé,
- Des moyens d'actionnement desdits moyens de maintien, commandés à réception d'un premier signal de pilotage (S_p1),
- Un circuit de pilotage configuré pour générer ledit premier signal de pilotage lorsque le dispositif interrupteur de courant doit être maintenu à l'état fermé pour empêcher sa rupture, en vue de maintenir la cellule électrochimique en fonctionnement.

Selon une particularité, les moyens de maintien sont de type à pression mécanique.

Selon une réalisation particulière, les moyens de maintien comportent un doigt de blocage actionnable, destiné à traverser le corps de la cellule électrochimique en vue d'agir sur le dispositif interrupteur de courant.

Selon une particularité, le circuit de pilotage est configuré pour envoyer un deuxième signal de pilotage aux moyens d'actionnement, représentatif d'une désactivation des moyens de maintien.

Selon une autre particularité, les moyens d'actionnement comportent une came actionnable en rotation, agencée pour agir sur le doigt de blocage pour le déplacer en translation.

En variante, les moyens d'actionnement comportent des moyens de commande électromécanique dudit doigt.

Selon une autre réalisation particulière, les moyens de maintien comportent un élément de blocage réalisé dans un matériau polymère réticulable et destiné à être agencé entre le corps de la cellule électrochimique et la borne portant le dispositif interrupteur de courant.

Selon une particularité, les moyens d'actionnement comportent une source lumineuse commandée par ledit premier signal de pilotage, et agencée pour générer un signal lumineux à destination de l'élément de blocage pour stimuler la réticulation du matériau polymère.

Selon une autre réalisation particulière, les moyens de maintien comportent un caisson étanche agencé sur au moins une partie du corps de la cellule électrochimique portant le dispositif interrupteur de courant et destiné à recevoir un gaz à une pression suffisante pour générer une contre-pression contre ladite partie du corps de la cellule électrochimique en vue de maintenir le dispositif interrupteur de courant dans son état fermé.

Selon une particularité, les moyens d'actionnement comportent alors une réserve de gaz commandée par une vanne contrôlable par ledit premier signal de pilotage.

Selon une autre particularité, le circuit de pilotage est configuré pour émettre un deuxième signal de pilotage apte à commander des moyens d'évacuation du gaz injecté dans ledit caisson étanche pour désactiver lesdits moyens de maintien.

Selon une particularité, le circuit de pilotage comporte une unité de traitement et de commande, apte à recevoir des signaux de commande et à générer chaque signal de pilotage reçu à partir des signaux de commande reçus.

L'invention concerne également un système d'alimentation électrique comprenant au moins un boîtier dans lequel est logé une cellule électrochimique qui comporte un corps et un dispositif interrupteur de courant placé sur une borne de ladite cellule électrochimique et configuré pour passer d'un état fermé dans lequel il assure le passage du courant fourni par la cellule électrochimique à un état ouvert dans lequel il est rompu lors d'un d'emballement thermique de la cellule électrochimique en vue d'isoler électriquement ladite cellule électrochimique, le système comportant un dispositif de sécurité tel que défini ci-dessus, configuré pour maintenir le dispositif interrupteur de courant de la cellule électrochimique à réception dudit premier signal de pilotage.

Selon une réalisation particulière, les moyens de maintien comportent un doigt actionnable, traversant le corps de la cellule en vue d'agir sur le dispositif interrupteur de courant.

Selon une particularité, le circuit de pilotage est configuré pour envoyer un deuxième signal de pilotage aux moyens d'actionnement, représentatif d'une désactivation des moyens de maintien.

Selon une autre particularité, les moyens d'actionnement comportent une came actionnable en rotation, agencée pour agir sur le doigt pour le déplacer en translation.

En variante, les moyens d'actionnement comportent des moyens de commande électromécanique dudit doigt.

Selon une autre réalisation particulière, les moyens de maintien comportent un élément de blocage réalisé dans un matériau polymère réticulable agencé entre le corps de la cellule et la borne portant le dispositif interrupteur de courant.

Selon une particularité, les moyens d'actionnement comportent une source lumineuse commandée par ledit premier signal de pilotage, et agencée pour générer un signal lumineux à destination de l'élément de blocage en vue d'obtenir la réticulation du matériau polymère.

Selon une autre réalisation particulière, les moyens de maintien comportent un caisson étanche agencé dans ledit boîtier pour enfermer au moins une partie du corps de la cellule portant le dispositif interrupteur de courant, ledit caisson étanche étant apte à recevoir un gaz à une pression suffisante pour générer une contre-pression contre ladite partie du corps de la cellule électrochimique en vue de maintenir le dispositif interrupteur de courant dans son état fermé.

Selon une particularité, les moyens d'actionnement comportent une réserve de gaz commandée par une vanne contrôlable par ledit premier signal de pilotage.

Selon une autre particularité, le circuit de pilotage est configuré pour émettre un deuxième signal de pilotage apte à commander des moyens d'évacuation du gaz injecté dans ledit caisson étanche pour désactiver lesdits moyens de maintien.

Selon une particularité, le circuit de pilotage comporte une unité de traitement et de commande, apte à recevoir des signaux de commande.

### Brève description des figures

D'autres caractéristiques et avantages vont apparaître dans la description détaillée qui suit faite en regard des dessins annexés dans lesquels :
- La figure 1 représente, vue en coupe et de manière schématique, une cellule au lithium de type 18650 ou 21700 ;
- Les figures 2A et 2B représentent respectivement, vus en perspective, un dispositif interrupteur de courant et un évent, classiquement employés dans une batterie au lithium telle que représentée sur la figure 1 ;
- Les figures 3A et 3B illustrent, en vue de côté et de dessus, le principe de réalisation d'un pack de plusieurs cellules électrochimiques, rangées en quinconce ;
- La figure 4 illustre de manière schématique le principe de réalisation du dispositif de sécurité de l'invention adapté sur une cellule électrochimique ;
- La figure 5A représente une première réalisation du dispositif de sécurité de l'invention adapté sur une cellule électrochimique et la figure 5B l'application de cette première réalisation sur un pack de plusieurs cellules électrochimiques ;
- La figure 6A représente une deuxième réalisation du dispositif de sécurité de l'invention adapté sur une cellule électrochimique et la figure 6B l'application de cette deuxième réalisation sur un pack de plusieurs cellules électrochimiques ;
- La figure 7A représente une troisième réalisation du dispositif de sécurité de l'invention adapté sur une cellule électrochimique et la figure 7B l'application de cette troisième réalisation sur un pack de plusieurs cellules électrochimiques ;
- La figure 7C illustre le principe de réversibilité appliqué à la troisième réalisation du dispositif de sécurité de l'invention ;

### Description détaillée d'au moins un mode de réalisation

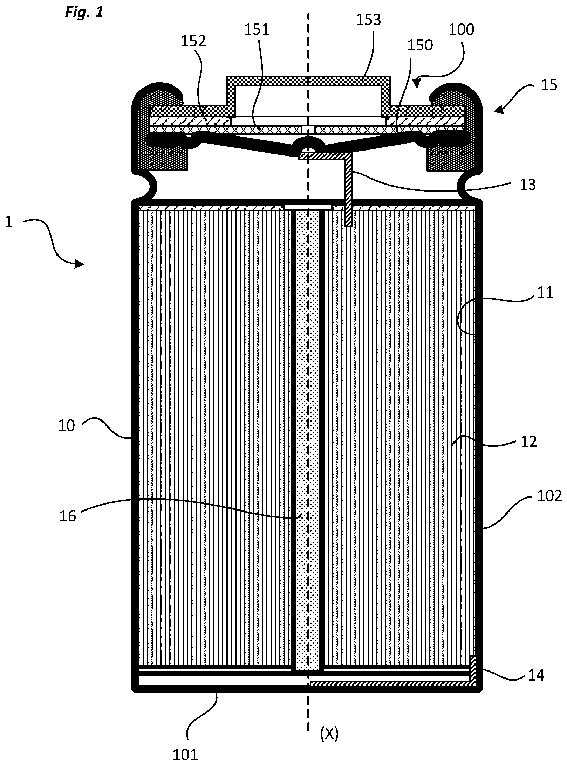

Dans la suite de la description, les termes "haut", "bas", "inférieur", "supérieur", "au-dessus", "au-dessous" sont à comprendre en se référant à l'axe (X) vertical représenté sur la figure 1.

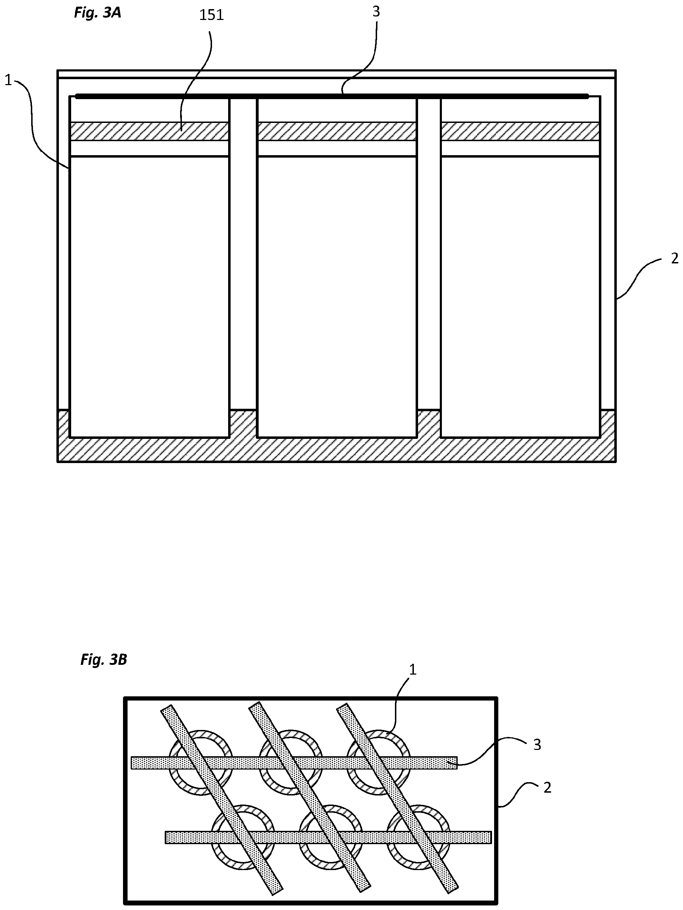

Il faut noter que sur les figures 3A et suivantes, les cellules électrochimiques sont représentées de manière simplifiée et schématique, reprenant uniquement les éléments suffisants à la compréhension de l'invention.

Le dispositif de sécurité de l'invention est notamment parfait pour s'adapter sur au moins une cellule secondaire électrochimique au lithium.

Le dispositif de sécurité de l'invention est décrit principalement pour une cellule de forme cylindrique de révolution, par exemple de type 18650 ou 21700, mais il faut comprendre qu'il peut s'adapter sur une cellule présentant une forme externe différente, notamment de type prismatique, son principe étant reproductible quelle que soit la forme de la cellule.

En référence à la figure 1, une cellule secondaire au lithium classique de type 18650 ou 21700 présente une forme cylindrique à base circulaire, développée autour de l'axe (X). Une telle cellule est par exemple décrite dans le brevet US8323825B2**.**

De manière non limitative, une telle cellule 1 au lithium comporte principalement un conteneur comportant une tête supérieure comprenant une paroi supérieure 100 portant le pôle positif, une tête inférieure comprenant une paroi inférieure 101 portant le pôle négatif et une paroi latérale 102. Le conteneur est composé généralement d'un godet 10, de forme cylindrique, et d'un capuchon 15 fixé sur le godet et venant refermer celui-ci sur sa partie supérieure. Ce godet 10 définit un volume interne 11 dans lequel sont placées les deux électrodes 12 (représentées par un unique ensemble sur la figure 1). Les deux électrodes 12 sont réalisées de part et d'autre d'une plaque isolante souple enroulée pour former un ensemble cylindrique venant se loger dans le godet 10 et formant un bobinot. Un électrolyte est ensuite injecté dans le volume interne 11 du godet. Un insert central 16 peut être inséré axialement dans le godet 10. La cellule comporte deux pattes de connexion 13, 14 reliées chacune à une électrode distincte. Sur sa partie supérieure, le godet 10 est refermé de manière hermétique par un capuchon 15. Ce capuchon 15 porte un empilement situé à l'intérieur du godet 10 et formé d'un évent de surpression 150, d'un dispositif interrupteur de courant 151, éventuellement d'une thermistance 152 de type CTP (à coefficient de température positif), et d'un capot 153 externe formant une première borne électrique de connexion de la cellule.

Le dispositif interrupteur de courant 151 est actionné par l'évent 150 lorsque la pression des gaz présents à l'intérieur du godet 10 devient trop importante. Dans cette situation de pression excessive, l'évent 150 se déforme jusqu'à venir rompre le dispositif interrupteur de courant 151 situé au-dessus, entraînant alors l'interruption du courant électrique fourni. Si la pression des gaz présents à l'intérieur du godet continue d'augmenter, l'évent 150 peut se déformer jusqu'à sa rupture, de manière à permettre une libération des gaz vers l'extérieur.

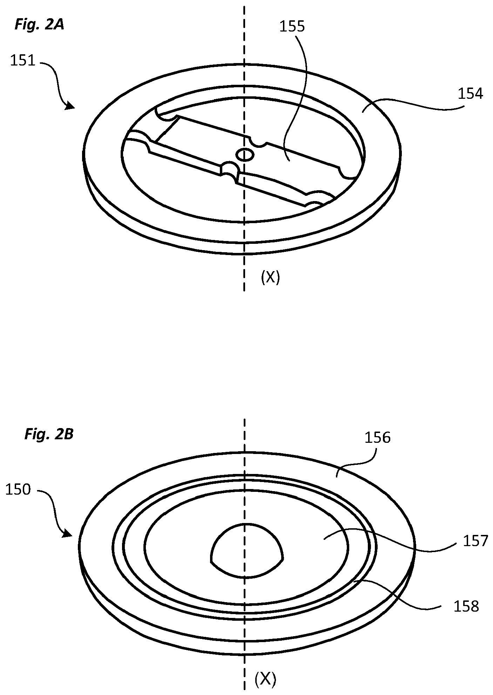

En référence à la figure 2A, de manière non limitative, le dispositif d'interruption de courant 151 peut se présenter sous la forme d'un anneau 154 coaxial avec l'axe (X), comprenant un pont 155 diamétral par lequel circule le courant électrique. Ce pont 155 est susceptible de rompre lorsque la pression dans le godet dépasse un certain seuil, interrompant alors le courant électrique dans la cellule.

Comme représenté sur la figure 2B, de manière non limitative, l'évent peut se présenter sous la forme d'un disque 156 coaxial avec l'axe (X) et comportant un profil bombé 157 formant une concavité vers l'intérieur de la cellule. Sous l'effet de la pression, ce profil bombé se déforme pour former un profil convexe vers l'extérieur, et lorsque la pression dépasse un certain seuil, l'évent se rompt sous l'effet de la pression des gaz. L'évent peut comporter une saignée 158 annulaire formant une amorce de rupture.

L'évent de surpression principal est généralement placé du côté du pôle positif de la cellule, sur sa partie supérieure. De manière optionnelle, il peut être remplacé ou complété par un évent placé du côté du pôle négatif.

Comme représenté sur la figure 3A et sur la figure 3B, plusieurs cellules 1 peuvent être rangées à la verticale dans un boîtier 2 ("casing" en anglais), et connectées entre elles, en série/parallèle en employant des clinquants 3 métalliques permettant d'assurer les connexions, les cellules formant alors un pack. Les cellules 1 peuvent par exemple être rangées en quinconce. Des compartiments ou casiers peuvent être prévus pour tenir les cellules 1 dans le boîtier 2, au niveau de leur partie supérieure et/ou de leur partie inférieure.

Sur chaque cellule 1, un clinquant 3 est réalisé sous la forme d'une lame métallique venant au contact du pôle positif de la cellule 1.

Le dispositif de sécurité de l'invention est réalisé pour venir s'adapter sur au moins une cellule électrochimique.

L'invention vise à permettre un maintien du dispositif interrupteur de courant 151, à la demande. Le dispositif de sécurité vient agir sur le pont diamétral 155 du dispositif interrupteur de courant 151 pour le maintenir en position et empêcher sa rupture. Grâce à l'invention, le dispositif interrupteur de courant 151 peut conserver sa position. La fonction de conservation de la position du dispositif interrupteur de courant 151 peut être remplie par un maintien direct en effectuant un blocage ou par un maintien indirect en assurant une reprise d'effort sur un organe (en l'occurrence l'évent) qui, sans la présence de l'invention, viendrait appliquer une force sur le dispositif interrupteur de courant 151 pour l'actionner.

Dans la suite de la description, de manière non limitative, on considère que le dispositif interrupteur de courant 151 est monté sur la borne positive de la cellule électrochimique, sous son capot 153.

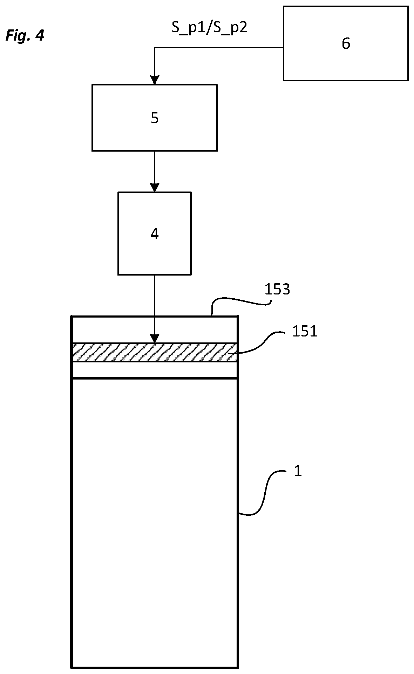

En référence à la figure 4, l'invention concerne un dispositif de sécurité qui comporte principalement :
- Des moyens de maintien 4 du dispositif interrupteur de courant ;
- Des moyens d'actionnement 5 desdits moyens de maintien 4 ;
- Un circuit de pilotage 6 chargé de générer un premier signal de pilotage S_p1 ou un deuxième signal de pilotage S_p2 (dans la première et troisième réalisations) à destination des moyens d'actionnement 5 ;

Les moyens de maintien 4 peuvent être de type à pression mécanique ou à pression fluidique.

Selon la nature et l'architecture des moyens de maintien 4, les moyens d'actionnement 5 peuvent également prendre différentes formes.

Le circuit de pilotage 6 comporte avantageusement une unité de traitement et de commande apte à générer sur une sortie ledit premier signal de pilotage S_p1 ou ledit deuxième signal de pilotage S_p2 à destination des moyens d'actionnement. Cette unité de traitement et de commande est par exemple configurée pour recevoir des données d'entrée, par exemple venant de divers capteurs ou d'une centrale de commande. Les données d'entrée sont par exemple analysées par l'unité de traitement et de commande pour décider ou non d'émettre chaque signal de pilotage S_p1, S_p2.

Chaque signal de pilotage S_p1, S_p2 peut être de type analogique, numérique...

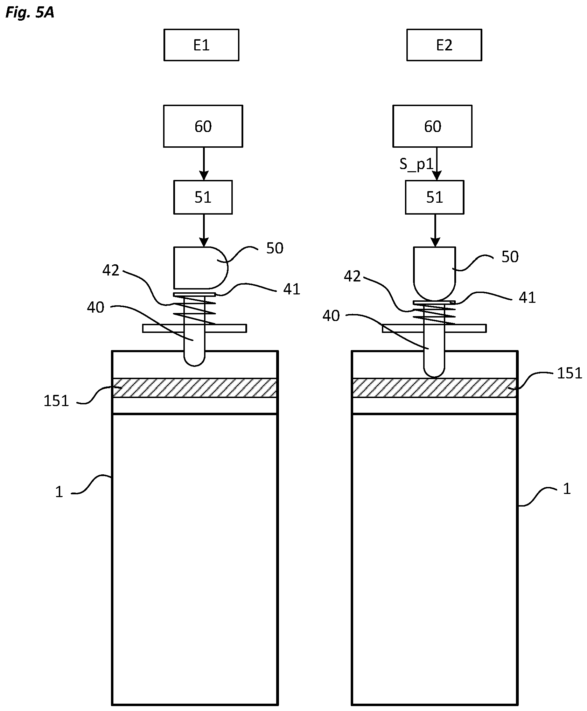

Selon une première réalisation représentée sur la figure 5A, les moyens de maintien 4 comportent un doigt 40 de blocage mobile en mouvement. Le corps de la cellule électrochimique 1 est percé au niveau de son capot 153, permettant ainsi le passage du doigt 40. Le doigt est par exemple monté en translation sur un support 41 suivant l'axe (X). Un ressort 42 est monté entre le doigt 40 et le support 41 pour assurer une pression de contact.

Les moyens d'actionnement du doigt peuvent être multiples. Sur la figure 5A, il s'agit d'une came 50 actionnable en rotation par un moteur électrique 51. La came 50 coopère avec le doigt 40, et sa rotation permet d'entraîner la translation du doigt 40. Le ressort 42 assure la pression de contact contre le dispositif interrupteur de courant 151.

Sur la figure 5A, on peut voir que le doigt 40 est capable de prendre deux positions distinctes, selon l'orientation de la came :
- Une première position dans laquelle il est rétracté, laissant libre le dispositif interrupteur de courant 151 (état E1) ;
- Une deuxième position dans laquelle il vient en appui par son extrémité libre contre le dispositif interrupteur de courant 151, maintenant ce dernier dans son état fermé et l'empêchant de se rompre (état E2) ;

Dans cette première architecture, le circuit de pilotage 6 est configuré pour envoyer le premier signal de pilotage S_p1 au moteur 51 actionnant la came 50 pour l'entraîner en rotation, afin de faire passer le doigt de sa première position à sa deuxième position.

Dans une variante (non représentée) à cette première réalisation, les moyens d'actionnement 5 du doigt 40 peuvent être de type électromécanique utilisant un actionneur électromagnétique. Le circuit de pilotage 6 est apte à envoyer un signal de pilotage à l'actionneur électromagnétique pour commander le déplacement du doigt 40.

Dans cette première réalisation, les moyens de maintien 4 sont actionnables de manière réversible par le circuit de pilotage 6, c'est-à-dire que, tant que le dispositif interrupteur de courant 151 reste opérationnel, le doigt 40 peut passer d'une position à l'autre sur commande. Pour ramener le doigt vers sa première position, le circuit de pilotage 6 envoie par exemple le deuxième signal de pilotage S_p2 à destination des moyens d'actionnement 5.

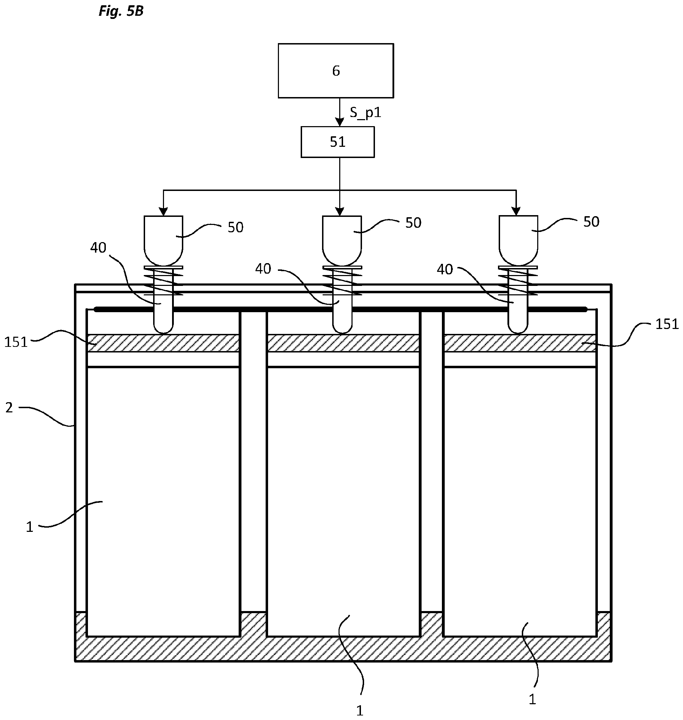

Comme illustré par la figure 5B, cette première réalisation est facilement duplicable à plusieurs cellules électrochimiques 1 juxtaposées, comme celles comprises dans un même pack batterie. Les moyens d'actionnement 5 peuvent alors être en partie mutualisés, avec un même moteur électrique 51 agissant pour faire tourner plusieurs cames 50 associées chacune à un doigt 40 de blocage distinct. Sur la figure 5B, le circuit de pilotage 6 envoie un premier signal de pilotage S_p1 commun à toutes les cellules. Il serait également possible de commander chaque doigt 40 de blocage de manière distincte à l'aide d'un signal de pilotage distinct.

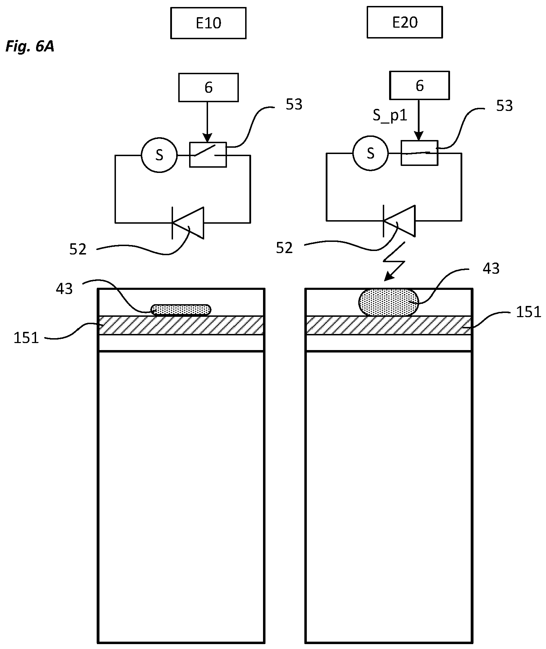

En référence à la figure 6A, selon une deuxième réalisation particulière, les moyens de maintien 4 comportent un élément de blocage 43 réalisé en matériau polymère réticulable, placé entre le capot 153 de la cellule électrochimique et son dispositif interrupteur de courant 151. Cet élément de blocage 43 est choisi pour réagir à la lumière, par exemple à la lumière UV. Sous l'effet de la lumière UV, le matériau polymère de l'élément de blocage 43 réticule, venant alors combler l'espace présent entre le capot 153 et le dispositif interrupteur de courant 151 de la cellule, et ainsi maintenir le dispositif interrupteur de courant 151 à l'état fermé. Dans cette deuxième réalisation, les moyens d'actionnement comportent une source lumineuse 52, capable d'émettre à la longueur d'onde adaptée à la réticulation du matériau polymère formant l'élément de blocage 43. L'élément de blocage 43 est par exemple fixé par collage.

En l'absence de pilotage, l'élément de blocage 43 laisse le dispositif interrupteur de courant 151 libre de fonctionner (état E10). Sur demande, le circuit de pilotage 6 est configuré pour envoyer le premier signal de pilotage S_p1 à un organe de commande 53 de la source lumineuse 52, pour l'alimenter en électricité via une source d'alimentation S. La lumière d'une source lumineuse 52 (de type UV par exemple) stimule l'élément de blocage 43, entraînant la réticulation de son matériau (état E20). Il faut noter que la lumière est diffusée à travers des ouvertures réalisées à travers le capot 153 de la cellule, permettant d'activer l'élément de blocage 43.

De manière non limitative, le polymère utilisé est de type acrylate. La fonction acrylate présente une très grande réactivité aux UV, le changement de phase liquide-solide étant quasi instantané (< 0,2 s). Il faut adapter la colle employée à la longueur d'onde d'illumination. Dans le cas de l'invention on utilise par exemple utiliser une colle qui réagit à la longueur d'onde de 380nm.

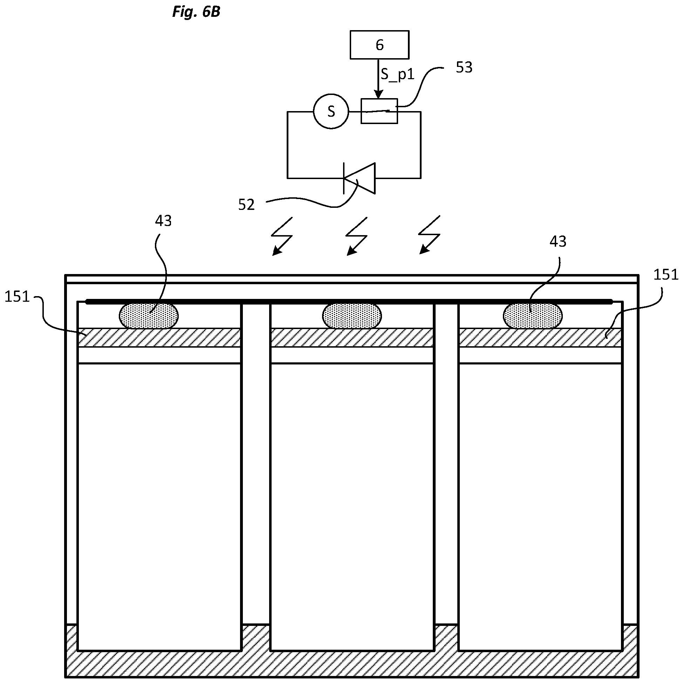

Comme représenté sur la figure 6B, cette deuxième réalisation est facilement duplicable à plusieurs cellules électrochimiques 1 juxtaposées dans un boîtier 2. Les moyens d'actionnement 5 peuvent alors être en partie mutualisés, avec une même source lumineuse 52 venant exciter plusieurs éléments de blocage 43, associées chacun à une cellule électrochimique 1 distincte. La source lumineuse 52 peut bien entendu être composée de plusieurs organes lumineux connectés entre eux.

Il faut noter que cette deuxième réalisation est irréversible. La polymérisation du polymère, et donc le blocage du dispositif interrupteur de courant, sont définitifs.

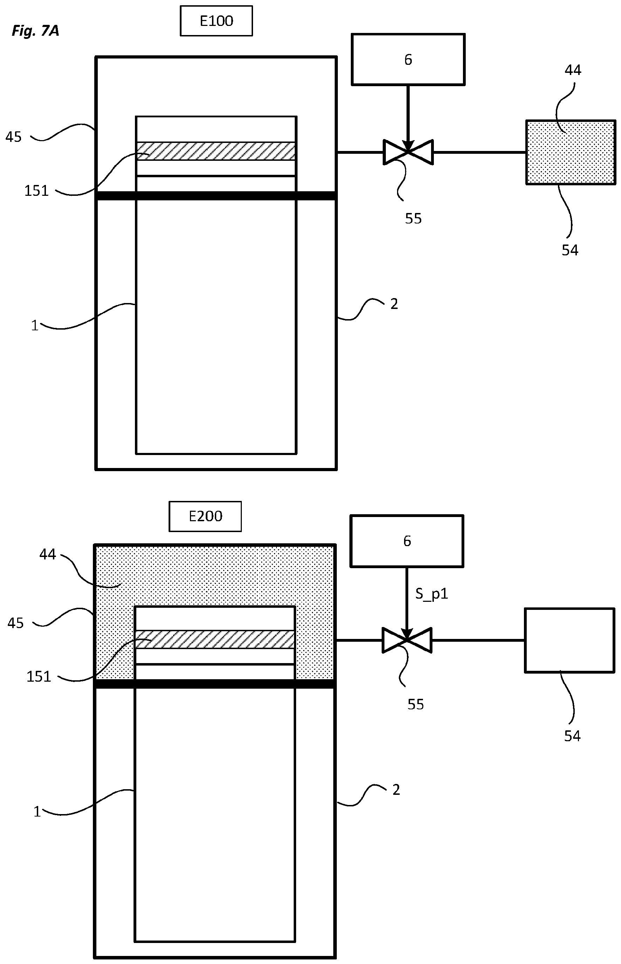

Dans une troisième réalisation représentée sur la figure 7A, les moyens de maintien 4 utilisent un gaz 44 injecté à une pression suffisante dans un caisson 45 étanche arrangé autour de la tête de la cellule électrochimique 1 portant le dispositif interrupteur de courant 151. Le gaz 44 est avantageusement un gaz inerte tel que par exemple l'azote. Cette réalisation est facilement implantable dans une configuration où les cellules 1 sont logées dans un même boîtier (figures 3A et 3B). Le caisson 45 étanche est alors réalisé directement dans le boîtier 2, pour une ou plusieurs cellules 1 juxtaposées.

Le caisson 45 étanche comporte une entrée de gaz. Les moyens d'actionnement 5 comportent une réserve de gaz 54 et une vanne 55 contrôlable.

En fonctionnement normal, le dispositif interrupteur de courant 151 de la cellule électrochimique est libre de fonctionner (état E100).

Sur demande, le circuit de pilotage 6 est apte à envoyer le premier signal de pilotage S_p1 à destination de la vanne 55 contrôlable pour contrôler la vanne à l'ouverture ou à la fermeture et donc l'injection ou non de gaz dans le caisson 45 étanche.

Lorsque le gaz 44 est présent à une pression suffisante dans le caisson 45, celui-ci crée une contre-pression contre le capot de chaque cellule électrochimique 1, empêchant ainsi la rupture du dispositif interrupteur de courant 151 (état E200), sous la pression de l'évent 150. Le gaz injecté permet une reprise des efforts appliqués sur l'évent 150 qui, sans la contre-pression, s'appliquerait sur le dispositif interrupteur de courant 151.

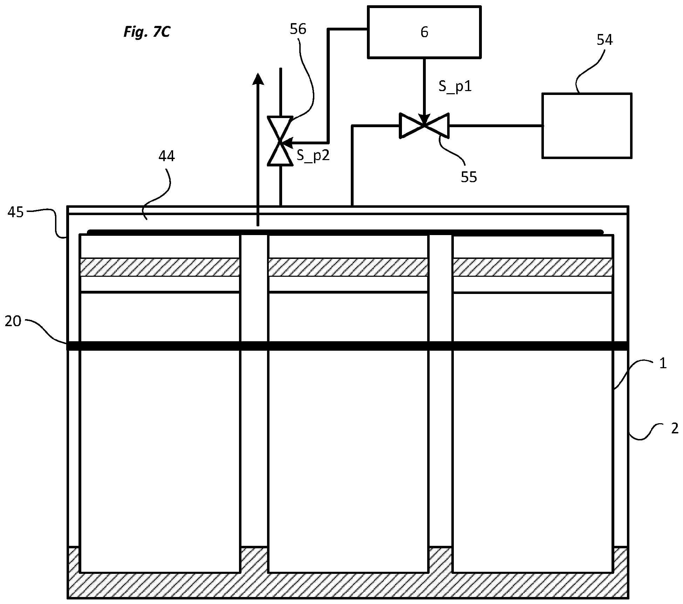

Comme dans la première réalisation, cette troisième réalisation est réversible, permettant d'activer ou de désactiver les moyens de maintien 4 à la demande, selon les conditions de fonctionnement. Le circuit de pilotage 6 est ainsi configuré pour générer et envoyer le deuxième signal de pilotage S_p2 à destination de moyens d'évacuation du gaz présent dans le caisson étanche. Ces moyens d'évacuation peuvent être une deuxième vanne 56 contrôlable, faisant partie des moyens d'actionnement 5. La figure 7C illustre ce principe de réversibilité.

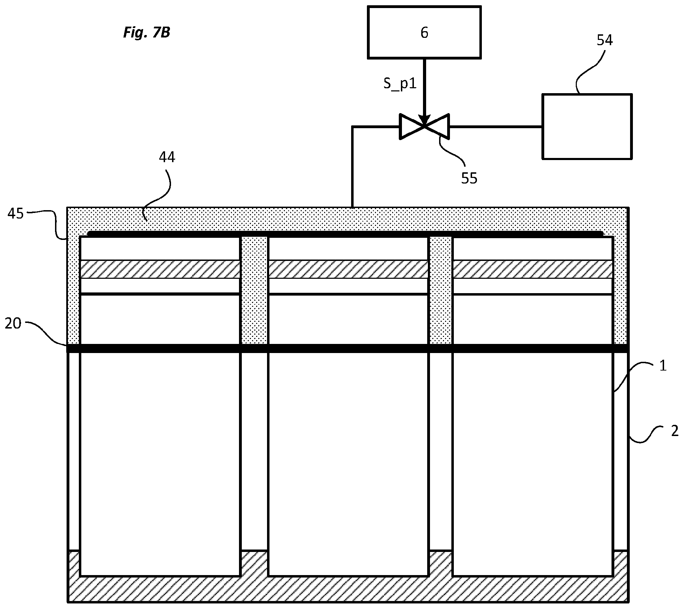

Comme représenté sur la figure 7B, cette troisième réalisation présente l'avantage de pouvoir facilement s'appliquer à un pack de cellules électrochimiques 1 logées dans un même boîtier 2. Une membrane étanche 20 peut être implantée dans le boîtier pour créer le caisson 45 étanche dans lequel vient se loger la tête de chaque cellule électrochimique 1 du pack. Sur la figure 7B, l'entrée de gaz est commune à toutes les cellules du pack mais le caisson 45 pourrait également être compartimenté pour séparer les cellules et les actionnements. Une entrée de gaz distincte doit alors être prévue pour chaque compartiment.

Selon un aspect particulier de l'invention, il faut noter que le dispositif de sécurité de l'invention est destiné à être monté en permanence sur la cellule ou éventuellement sur un groupe de plusieurs cellules dans le cas de la troisième réalisation.

L'invention présente ainsi de nombreux avantages, parmi lesquels :
- Une solution simple et fiable qui permet de maintenir une cellule électrochimique opérationnelle ;
- Plusieurs variantes de réalisation avec des moyens d'actionnement différents ;

## Revendications

1. Dispositif de sécurité adaptable sur une cellule électrochimique (1), ladite cellule électrochimique comprenant un corps et un dispositif interrupteur de courant (151) placé sur une borne de la cellule électrochimique et configuré pour passer d'un état fermé dans lequel il assure le passage du courant fourni par la cellule électrochimique à un état ouvert dans lequel il est rompu mécaniquement pour isoler électriquement ladite cellule électrochimique, **caractérisé en ce que** le dispositif de sécurité comporte :
- Des moyens de maintien (4), configurés pour maintenir le dispositif interrupteur de courant (151) dans son état fermé,
- Des moyens d'actionnement (5) desdits moyens de maintien, commandés à réception d'un premier signal de pilotage (S_p1),
- Un circuit de pilotage (6) configuré pour générer ledit premier signal de pilotage (S_p1) lorsque le dispositif interrupteur de courant (151) doit être maintenu à l'état fermé pour empêcher sa rupture, en vue de maintenir la cellule électrochimique en fonctionnement.

2. Dispositif de sécurité selon la revendication 1, **caractérisé en ce que** les moyens de maintien (4) sont de type à pression mécanique.

3. Dispositif de sécurité selon la revendication 2, **caractérisé en ce que** les moyens de maintien (4) comportent un doigt (40) de blocage actionnable, destiné à traverser le corps de la cellule électrochimique (1) en vue d'agir sur le dispositif interrupteur de courant (151).

4. Dispositif selon la revendication 3, **caractérisé en ce que** le circuit de pilotage (6) est configuré pour envoyer un deuxième signal de pilotage (S_p2) aux moyens d'actionnement (5), représentatif d'une désactivation des moyens de maintien (4).

5. Dispositif de sécurité selon la revendication 3 ou 4, **caractérisé en ce que** les moyens d'actionnement (5) comportent une came (50) actionnable en rotation, agencée pour agir sur le doigt (40) de blocage pour le déplacer en translation.

6. Dispositif de sécurité selon la revendication 3 ou 4, **caractérisé en ce que** les moyens d'actionnement (5) comportent des moyens de commande électromécanique dudit doigt.

7. Dispositif de sécurité selon la revendication 2, **caractérisé en ce que** les moyens de maintien (4) comportent un élément de blocage (43) réalisé dans un matériau polymère réticulable et destiné à être agencé entre le corps de la cellule électrochimique et la borne portant le dispositif interrupteur de courant (151).

8. Dispositif de sécurité selon la revendication 7, **caractérisé en ce que** les moyens d'actionnement (5) comportent une source lumineuse (52) commandée par ledit premier signal de pilotage (S_p1), et agencée pour générer un signal lumineux à destination de l'élément de blocage (43) pour stimuler la réticulation du matériau polymère.

9. Dispositif de sécurité selon la revendication 1, **caractérisé en ce que** les moyens de maintien (4) comportent un caisson (45) étanche agencé sur au moins une partie du corps de la cellule électrochimique (1) portant le dispositif interrupteur de courant et destiné à recevoir un gaz (44) à une pression suffisante pour générer une contre-pression contre ladite partie du corps de la cellule électrochimique en vue de maintenir le dispositif interrupteur de courant (151) dans son état fermé.

10. Dispositif de sécurité selon la revendication 9, **caractérisé en ce que** les moyens d'actionnement (5) comportent une réserve de gaz (54) commandée par une vanne (55) contrôlable par ledit premier signal de pilotage (S_p1).

11. Dispositif selon la revendication 10, **caractérisé en ce que** le circuit de pilotage (6) est configuré pour émettre un deuxième signal de pilotage (S_p2) apte à commander des moyens d'évacuation du gaz (44) injecté dans ledit caisson (45) étanche pour désactiver lesdits moyens de maintien (4).

12. Dispositif de sécurité selon l'une des revendications 1 à 11, **caractérisé en ce que** le circuit de pilotage (6) comporte une unité de traitement et de commande, apte à recevoir des signaux de commande et à générer chaque signal de pilotage (S_p1, S_p2) reçu à partir des signaux de commande reçus.

13. Système d'alimentation électrique comprenant au moins un boîtier (2) dans lequel est logé une cellule électrochimique (1) qui comporte un corps et un dispositif interrupteur de courant (151) placé sur une borne de ladite cellule électrochimique et configuré pour passer d'un état fermé dans lequel il assure le passage du courant fourni par la cellule électrochimique à un état ouvert dans lequel il est rompu lors d'un d'emballement thermique de la cellule électrochimique (1) en vue d'isoler électriquement ladite cellule électrochimique, **caractérisé en ce qu'**il comporte un dispositif de sécurité tel que défini dans l'une des revendications 1 à 12, configuré pour maintenir le dispositif interrupteur de courant (151) de la cellule électrochimique à réception dudit premier signal de pilotage (S_p1).

14. Système selon la revendication 13, **caractérisé en ce que** les moyens de maintien (4) comportent un doigt (40) actionnable, traversant le corps de la cellule en vue d'agir sur le dispositif interrupteur de courant (151).

15. Système selon la revendication 14, **caractérisé en ce que** le circuit de pilotage (6) est configuré pour envoyer un deuxième signal de pilotage (S_p2) aux moyens d'actionnement (5), représentatif d'une désactivation des moyens de maintien (4).

16. Système selon la revendication 14 ou 15, **caractérisé en ce que** les moyens d'actionnement (5) comportent une came (50) actionnable en rotation, agencée pour agir sur le doigt (40) pour le déplacer en translation.

17. Système selon la revendication 14 ou 15, **caractérisé en ce que** les moyens d'actionnement (5) comportent des moyens de commande électromécanique dudit doigt (40).

18. Système selon la revendication 13, **caractérisé en ce que** les moyens de maintien (4) comportent un élément de blocage (43) réalisé dans un matériau polymère réticulable agencé entre le corps de la cellule et la borne portant le dispositif interrupteur de courant (151).

19. Système selon la revendication 18, **caractérisé en ce que** les moyens d'actionnement comportent une source lumineuse (52) commandée par ledit premier signal de pilotage (S_p1), et agencée pour générer un signal lumineux à destination de l'élément de blocage (43) en vue d'obtenir la réticulation du matériau polymère.

20. Système selon la revendication 13, **caractérisé en ce que** les moyens de maintien (4) comportent un caisson (45) étanche agencé dans ledit boîtier pour enfermer au moins une partie du corps de la cellule portant le dispositif interrupteur de courant (151), ledit caisson étanche étant apte à recevoir un gaz (44) à une pression suffisante pour générer une contre-pression contre ladite partie du corps de la cellule électrochimique en vue de maintenir le dispositif interrupteur de courant (151) dans son état fermé.

21. Système selon la revendication 20, **caractérisé en ce que** les moyens d'actionnement (5) comportent une réserve de gaz (54) commandée par une vanne (55) contrôlable par ledit premier signal de pilotage (S_p1).

22. Système selon la revendication 21, **caractérisé en ce que** le circuit de pilotage (6) est configuré pour émettre un deuxième signal de pilotage (S_p2) apte à commander des moyens d'évacuation du gaz (44) injecté dans ledit caisson (45) étanche pour désactiver lesdits moyens de maintien (4).

23. Système selon l'une des revendications 13 à 22, **caractérisé en ce que** le circuit de pilotage (6) comporte une unité de traitement et de commande, apte à recevoir des signaux de commande.
